# EUROPÄISCHE PATENTSCHRIFT

(11) **EP 2 959 762 B1**
(45) Veröffentlichungstag und Bekanntmachung des Hinweises auf die Patenterteilung: **01.05.2019**
(21) Anmeldenummer: 15401053.2
(22) Anmeldetag: 01.06.2015
(51) Int. Cl.: A01C 7/08, A01C 7/10

(54) **PNEUMATISCHE SÄMASCHINE**
PNEUMATIC SOWING MACHINE
SEMOIR PNEUMATIQUE

(30) Priorität: 24.06.2014 DE 102014108769
(43) Veröffentlichungstag der Anmeldung: 30.12.2015
(73) Patentinhaber: Amazonen-Werke H. Dreyer GmbH & Co. KG, 49205 Hasbergen (DE)
(72) Erfinder: Dreyer, Justus, 49076 Osnabrück (DE); Johannaber, Stefan Jan, 49536 Lienen (DE); Teckemeyer, Stephan, 49504 Lotte (DE)

(56) Entgegenhaltungen:
- EP-A1- 2 932 818
- WO-A1-97/21338
- DE-A1- 19 522 060
- DE-A1-102008 016 107
- DE-C1- 19 613 785
- US-A1- 2012 103 238
- US-A1- 2013 319 305

## Beschreibung

Die Erfindung betrifft eine pneumatische Sämaschine mit mehreren Säscharen, denen Saatgut von einem Saatgutbehälter über einen Verteilerkopf, von dem einzelne Abgangsleitungen zu den einzelnen Säscharen führen, pneumatisch zugeführt wird, wobei den Abgangsleitungen Absperrelemente zugeordnet sind.

Solche Sämaschinen sind aus dem Stand der Technik bekannt. Beispielsweise zeigt die DE 196 13 785 den Gegenstand des Oberbegriffs der unabhängigen Ansprüche mit Abgangsleitungen für pneumatisch arbeitende Verteilermaschinen, in denen einigen Abgangsleitungen des Verteilerkopfes Absperrelemente zugeordnet sind. Mit diesen als Klappen ausgebildeten Absperrelementen kann die jeweilige Abgangsleitung entweder ganz geöffnet oder ganz abgesperrt werden. Die US 2012/103238 A1 zeigt ebenfalls eine Sämaschine mit Abgangsleitungen, denen Absperrelemente zugeordnet sind.

Auch aus der EP 1 994 815 ist ein Verteilerkopf für eine Sä- oder Düngermaschine bekannt, bei der einigen Abgangsleitungen des Verteilerkopfes Absperrelemente zugeordnet sind. Mit diesen Absperrelementen kann die jeweilige Abgangsleitung für den Durchtritt von Saatgut ebenfalls nur ganz geöffnet oder ganz verschlossen werden, allerdings sind die Absperrelements so ausgebildet, dass der Luftdurchlass einstellbar ist, ohne dass dadurch aber die zugeführte Saatgutmenge beeinflusst wird.

Solche Sämaschinen ermöglichen, dass beispielsweise verschiedene Ablageabstände oder Spurbreiten berücksichtigt werden können, indem bestimmte Säschare abgesperrt und nicht mit Saatgut versorgt und somit in einen Passivzustand gebracht werden.

Bei Sämaschinen generell, insbesondere auch bei den oben genannten Sämaschinen, besteht das Problem, dass die Ablagequalität und Gleichmäßigkeit der Verteilung, insbesondere die Querverteilung, von Saatgut nicht immer zu gewährleisten ist. Probleme stellen dabei insbesondere Hangfahrt, aber auch der Abstand zwischen Verteilerkopf und Säschar dar, da die Länge der Abgangsleitung nicht für alle Säscharen gleich ist. Dadurch variiert auch der Druck (bzw. Druckabfall) in den Abgangsleitungen, die abgegebene Saatgutmenge schwankt und die Ablagequalität sinkt.

Es ist daher Aufgabe der Erfindung, die Ablagequalität bei einer pneumatischen Sämaschine zu verbessern.

Die Erfindung betrifft eine Sämaschine nach Anspruch 1. Die Absperrelemente sind demnach zum Verändern der durchgelassenen Saatgutmenge in unterschiedliche Durchlassstellungen einstellbar.

Derartige Absperrelemente ermöglichen, für jede Abgangsleitung die durchgelassene Saatgutmenge einzustellen. Somit kann die ausgebrachte Saatgutverteilung sehr genau eingestellt werden.

Die Absperrelemente können den Abgangsleitungen derart zugeordnet sein, dass sie die verteilerkopfseitige Öffnung der jeweiligen Abgangsleitung mindestens teilweise verdecken können. Sie können dazu im Inneren des Verteilerkopfes angeordnet sein. Insbesondere können die Öffnungen und die Absperrelemente an den Innenwänden des Verteilerkopfes angeordnet sein. Alternativ können die Absperrelemente in einer Abzweigung einer Abgangsleitung angeordnet sein, insbesondere, wenn eine Rückführleitung zum Saatgutbehälter von der Abgangsleitung abzweigt.

Vorteilhaft können die Absperrelemente derart ausgebildet sein, dass mehrere oder alle Absperrelemente unabhängig voneinander einstellbar sind. Dies ermöglicht ein besonders differenziertes Einstellen der ausgebrachten Saatgutverteilung.

Eine, mehrere oder alle Absperrelemente können derart ausgebildet und/oder angeordnet sein, dass die durchgelassene Saatgutmenge schrittweise oder kontinuierlich veränderbar ist. Insbesondere könne sie zum schrittweisen oder kontinuierlichen Ändern der durchgelassenen Saatgutmenge durch Erhöhen oder Verringern der Größe der verteilerkopfseitigen Öffnung der jeweiligen Abgangsleitung ausgebildet sein.

Die Absperrelemente sind mindestens in eine erste Durchlassstellung, in der die verteilerkopfseitige Öffnung der Abgangsleitung nicht abgedeckt ist und in eine zweite Durchlassstellung, in der die verteilerkopfseitige Öffnung der Abgangsleitung teilweise abgedeckt ist, einstellbar. Zusätzlich sind die Absperrelemente in eine Absperrstellung, in der die verteilerkopfseitige Öffnung der jeweiligen Abgangsleitung ganz abgedeckt ist, einstellbar. Es können noch weitere Durchlassstellungen vorgesehen sein. Die Absperrelemente können jeweils eine Verschlussklappe umfassen. Die Absperrelemente können als verschiebbar und/oder rotierbar angeordnete Scheiben, insbesondere Klappen, ausgebildet sein. Insbesondere können sie derart verschiebbar und/oder rotierbar sein, dass mit ihnen die Größe der verteilerkopfseitigen Öffnung jeder Abgangsleitung schrittweise oder kontinuierlich erhöht oder reduziert werden kann. Die Scheiben können verschiedene Formen, beispielsweise rund, oval oder mehreckig, insbesondere rechteckig, haben.

Die Absperrelemente umfassen jeweils eine Weiche mit mindestens zwei Durchlassstellungen, wobei in den Durchlassstellungen ein Saatgutstrom auf einen ersten Teil der jeweiligen Abgangsleitung, der mit dem Säschar verbunden ist, und einen zweiten Teil der jeweiligen Abgangsleitung, der mit dem Saatgutbehälter verbunden ist, in unterschiedlichem Verhältnis aufgeteilt wird. Die Durchlassstellungen sind derart, dass der Saatgutstrom ausschließlich oder teilweise in die jeweilige Abgangsleitung und/oder ausschließlich oder teilweise in den Saatgutbehälter transportiert wird. Insbesondere kann die Weiche in einer Abzweigung einer Abgangsleitung angeordnet sein, an der eine Rückführleitung von einer Abgangsleitung abzweigt.

Dies ermöglicht, dass ein Dosierer, der den Saatgutstrom vom Saatgutbehälter zum Verteilerkopf dosiert, nicht entsprechend den Stellungen der Absperrelemente eingestellt bzw. angepasst werden muss, da nicht ausgebrachtes Saatgut in den Saatgutbehälter zurückgeleitet wird, anstatt im Verteilerkopf zu verbleiben.

Eines, mehrere oder alle Absperrelemente können eine Blende, insbesondere eine Lamellenblende, umfassen, die derart ausgebildet und/oder angeordnet ist, dass der Durchmesser der verteilerkopfseitigen Öffnung der jeweiligen Abgangsleitung schrittweise oder kontinuierlich erhöht oder verringert werden kann.

Die Sämaschine umfasst erfindungsgemäß eine Regeleinrichtung zum automatischen Regeln der Absperrelemente. Sie kann zusätzlich eine Steuereinrichtung zum manuellen und/oder automatischen Steuern der Absperrelemente umfassen. Dies ermöglicht, dass kein direkter Zugang zu den Absperrelementen notwendig ist, um die jeweilige Durchlassstellung einzustellen. Insbesondere kann das Einstellen der Absperrelemente maschinengesteuert erfolgen.

Die pneumatische Sämaschine kann des Weiteren einen Sensor zum Detektieren der durchgelassenen Saatgutmenge und/oder eines Füllstands des Saatguts im Saatgutbehälter umfassen. Die Steuerung der Absperrelemente kann dann basierend auf den Messwerten erfolgen.

Zwischen dem Sensor und der Regeleinrichtung kann eine Datenverbindung bestehen oder herstellbar sein. Die Kombination aus einem Sensor zum Detektieren der durchgelassenen Saatgutmenge und der Regeleinrichtung ermöglicht, dass die durchgelassene Saatgutmenge automatisch angepasst wird, wenn der Sensor detektiert, dass sie nicht einer Sollsaatgutmenge entspricht.

Die im Zusammenhang mit der Vorrichtung beschriebenen Merkmale können mit den im Folgenden beschriebenen Verfahrensmerkmalen beliebig kombiniert werden. Die im Zusammenhang mit der Vorrichtung beschriebenen Vorteile werden im Zusammenhang mit den entsprechenden Verfahrensmerkmalen nicht wiederholt.

Das erfindungsgemäße Verfahren zum pneumatischen Verteilen von Saatgut mit einer pneumatischen Sämaschine mit mehreren Säscharen ist durch den unabhängigen Verfahrensanspruch definiert. Den Säscharen wird Saatgut von einem Saatgutbehälter über einen Verteilerkopf, von dem einzelne Abgangsleitungen zu den einzelnen Säscharen führen, pneumatisch zugeführt, wobei den Abgangsleitungen Absperrelemente zugeordnet sind, und das Verfahren umfasst, dass die Absperrelemente zum Verändern der durchgelassenen Saatgutmenge in unterschiedliche Durchlassstellungen eingestellt werden.

Die durchgelassene Saatgutmenge kann schrittweise oder kontinuierlich verändert werden. Insbesondere kann die durchgelassene Saatgutmenge durch Erhöhen oder Verringern der Größe der verteilerkopfseitigen Öffnung der Abgangsleitungen verändert werden.

Erfindungsgemäß wird jedes der Absperrelemente jeweils in eine erste Durchlassstellung, in der die verteilerkopfseitige Öffnung der Abgangsleitung nicht abgedeckt ist oder in eine zweite Durchlassstellung, in der die verteilerkopfseitige Öffnung der Abgangsleitung teilweise abgedeckt ist oder in eine Absperrstellung, in der die verteilerkopfseitige Öffnung der Abgangsleitung ganz abgedeckt ist, eingestellt. Es kann insbesondere auch in weitere Durchlassstellungen gebracht werden

Mindestens eines der Absperrelemente, beispielsweise eine Weiche, hat mindestens zwei Durchlassstellungen, wobei eine der Durchlassstellungen, eingestellt wird, wobei in den Durchlassstellungen ein Saatgutstrom auf einen ersten Teil der jeweiligen Abgangsleitung, der mit dem Säschar verbunden ist, und einen zweiten Teil der jeweiligen Abgangsleitung, der mit dem Saatgutbehälter verbunden ist, in unterschiedlichem Verhältnis aufgeteilt wird. Eine Durchlassstellung kann so eingestellt werden, dass ein Saatgutstrom ausschließlich oder teilweise in die jeweilige Abgangsleitung oder ausschließlich oder teilweise in den Saatgutbehälter erfolgt. Das Absperrelement kann in diesem Fall beispielsweise eine Weiche sein.

Die Absperrelemente können mit einer Steuereinrichtung manuell oder automatisch gesteuert und/oder mit einer Regeleinrichtung automatisch geregelt werden.

Erfindungsgemäß werden der Saatgutstrom in einer Abgangsleitung und/oder ein Füllstand des Saatguts im Saatgutbehälter mit einem Sensor detektiert. Die so erzeugten Messwerte werden an eine Regeleinrichtung übermittelt, beispielsweise drahtlos oder drahtgebunden. Die Regeleinrichtung regelt automatisch, basierend auf den Messwerten, das der Abgangsleitung zugeordnete Absperrelement.

Es sei darauf hingewiesen, dass oben beschriebene Merkmale, die sich auf die Absperrelemente bzw. Abgangsleitungen beziehen, sofern nicht anders spezifiziert, jeweils für ein, mehrere, insbesondere alle Absperrelemente bzw. Abgangsleitungen zutreffen können.

Merkmale und Vorteile der Erfindung werden nachfolgend anhand der Figuren weiter erläutert. Dabei zeigen
- Fig. 1: eine schematische, nicht maßstabsgetreue Seitenansicht einer Sämaschine,
- Fig. 2: eine schematische, nicht maßstabsgetreue Darstellung eines Ausschnitts der Sämaschine,
- Fig. 3a-3c: schematische, nicht maßstabsgetreue Schrägansichten eines Verteilerkopfes,
- Fig. 4 a-d: schematische, nicht maßstabsgetreue Darstellung verschiedener Absperrelemente und ihrer Anordnung und
- Fig. 5: eine schematische, nicht maßstabsgetreue Draufsicht auf einen Verteilerkopf mit Absperrelementen.

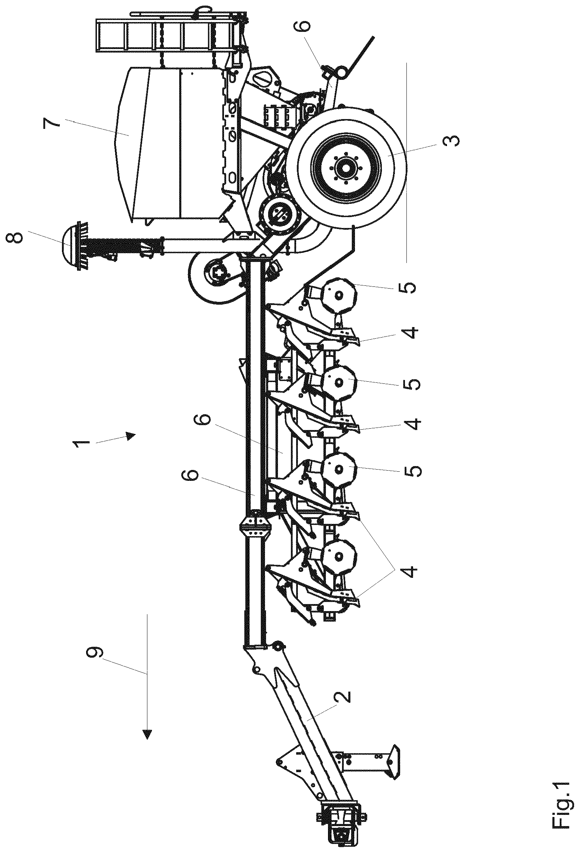

Fig. 1 zeigt bereits bekannte pneumatische Sämaschine 1, die in diesem Fall nicht selbstfahrend ist, sondern mit der Zugdeichsel 2 von einer hier nicht gezeigten Zugmaschine gezogen werden kann. Eine selbstfahrende Sämaschine ist jedoch ebenfalls denkbar. Die Sämaschine umfasst ein Laufrad 3, die Säscharen 4 und Tiefenführungselemente 5, die an einem Rahmen 6 befestigt sind. Des Weiteren umfasst die Sämaschine einen Saatgutbehälter 7, in den Saatgut gefüllt wird, und einen Verteilerkopf 8. Die Sämaschine bewegt sich in Fahrtrichtung 9. Die Säschare sind zum Ablegen des Saatguts auf das Saatbett ausgebildet. Weitere in der Figur gezeigt Elemente die bereits bekannt und/oder für die Erfindung nicht unmittelbar relevant sind, werden hier nicht näher erläutert. Die pneumatische Sämaschine kann, muss jedoch nicht, alle der oben genannten und/oder in Fig. 1 gezeigten Elemente aufweisen.

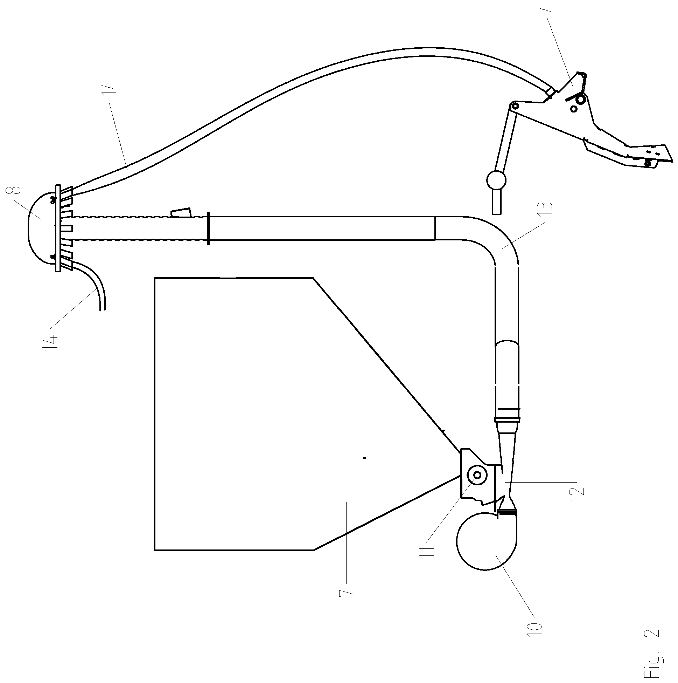

Fig. 2 zeigt eine schematische, nicht maßstabsgetreue Darstellung des Saatgutbehälters 7 und des Verteilerkopfes 8, von dem Abgangsleitungen 14 jeweils zu den einzelnen Säscharen 4 führen, einen Dosierer 11, eine Schleuse 12 und eine Förderleitung 13, die zwischen dem Saatgutbehälter und dem Verteilerkopf angeordnet sind, und ein Gebläse 10. Das Gebläse, der Dosierer und die Schleuse können, müssen jedoch jeweils nicht zwangsläufig Teil der Sämaschine sein.

Die Sämaschine ist so ausgebildet, dass den Säscharen Saatgut von dem Saatgutbehälter über den Verteilerkopf pneumatisch zugeführt werden kann. In diesem Fall wird die pneumatische Förderung mit dem Gebläse bewirkt. Die Sämaschine kann aber auch andere Elemente zur pneumatischen Förderung umfassen. Auf dem Weg zum Verteilerkopf wird das Saatgut typischerweise durch die Förderleitung transportiert.

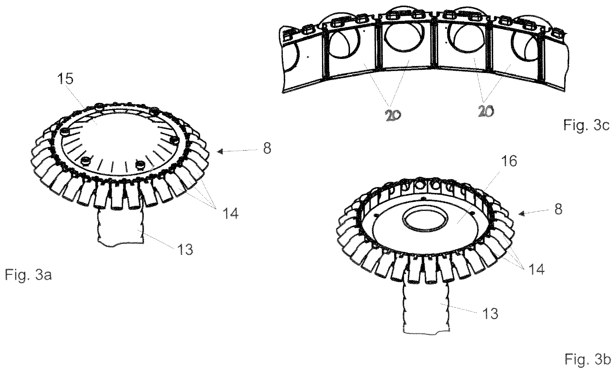

Fig. 3a-3c zeigen verschiedene Schrägansichten eines beispielhaften Verteilerkopfes 8. Dabei zeigt Fig. 3a einen Teil der Förderleitung 13, ein Deckelelement 15 und Ausläufe der Abgangsleitungen 14. Fig. 3b zeigt eine Ansicht, bei der das Deckelelement nicht dargestellt ist, so dass das Unterteil 16 des Verteilerkopfes, das auf die Förderleitung gesetzt wird, sichtbar ist. In Fig. 3c sind einige Ausläufe der Abgangsleitungen im Detail gezeigt.

Der Verteilerkopf kann zum Beispiel derart ausgebildet sein, dass das Saatgut, das pneumatisch in den Saatgutkopf transportiert wurde mit einer gewissen Geschwindigkeit aus dem Ende der Förderleitung kommt, von dem Deckelelement abprallt und sich auf die Ausläufe der Abgangsleitungen verteilt.

Der in Fig. 3a-3c gezeigte Verteilerkopf ist nur beispielhaft und kann auch anders ausgebildet sein. Insbesondere kann beispielsweise die Zahl der Ausläufe anders sein.

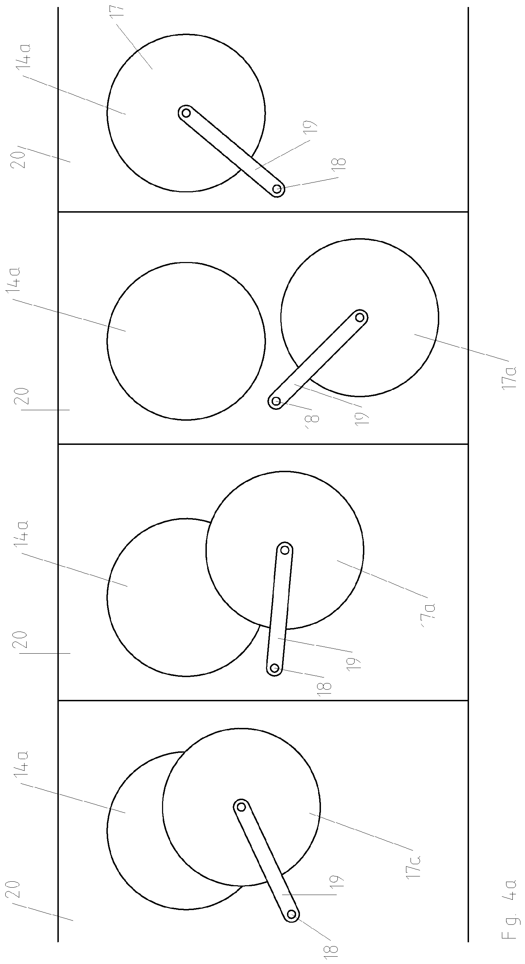

Die erfindungsgemäße Sämaschine umfasst Absperrelemente 17, die zum Verändern der durchgelassenen Saatgutmenge in unterschiedliche Durchlassstellungen einstellbar sind. Im Folgenden werden verschieden Formen von Absperrelementen, mögliche Durchlassstellungen und teilweise auch die jeweilige Absperrstellung anhand der Fig. 4a bis 4d erläutert. Erfindungsgemäß sind für jedes Absperrelement mindestens zwei Durchlassstellungen und gegebenenfalls zusätzlich eine Absperrstellung vorgesehen.

Fig. 4a zeigt Absperreinrichtungen 17 in Form von Klappen. Öffnungen der Abgangsleitungen 14 sind hier mit dem Bezugszeichen 14a gekennzeichnet. In
diesem Fall ist jeder der gezeigten Abgangsleitungen ein Absperrelement zugeordnet. Es ist jedoch ebenfalls möglich, dass nicht jeder Abgangsleitung ein Absperrelement zugeordnet ist, insbesondere, dass sich benachbarte Abgangsleitungen ein Absperrelement teilen.

Die Klappen 17 sind in diesem Fall in Form kreisförmiger Scheiben 17a ausgebildet, die an einem Haltearm 19 befestigt sind und parallel zur Seitenwand 20 des Verteilerkopfes an der Stelle der jeweiligen Öffnung um eine Achse 18 schwenkbar sind. Sie können jedoch eine andere Form haben, beispielsweise rechteckig oder oval, solange sie zum Abdecken mindestens eines Teils einer Öffnung 14a geeignet sind, idealerweise auch zum Abdecken der gesamten Öffnung.

Die runde Form hat hier den Vorteil, dass der Platzbedarf geringer ist als beispielsweise bei rechteckigen Scheiben. Der Anordnung der Öffnungen und Absperrelemente muss derart sein, dass ein Absperrelement nicht mit dem benachbarten Absperrelement kollidiert oder die benachbarte Öffnung unbeabsichtigt abdeckt. Für ein wie in der Fig. 4a angeordnetes rundes Absperrelement, dass die jeweilige Öffnung komplett bedecken kann, kann beispielsweise der Abstand zwischen den Rändern benachbarter Öffnungen weniger als einem Radius r der Öffnung betragen, insbesondere weniger als 0,7*r. Bei eckigen Klappen müsste bei gleichen Bedingungen der Abstand größer gewählt werden.

Fig. 4a zeigt verschiedene Stellungen der Absperrelemente, nämlich drei Durchlassstellungen (links) und die Absperrstellung rechts. In den von links aus gesehenen ersten beiden Durchlassstellungen ist die Öffnung jeweils teilweise verdeckt. In der dritten Durchlassstellung ist die Öffnung nicht verdeckt. Zwischen diesen Stellungen variiert (bei gleichem Saatguttyp) die durchgelassene Saatgutmenge. In der Absperrstellung ist die Öffnung komplett verdeckt und (im Idealfall) erreicht kein Saatgut die zu der Öffnung gehörende Abgangsleitung und die entsprechende Säschar.

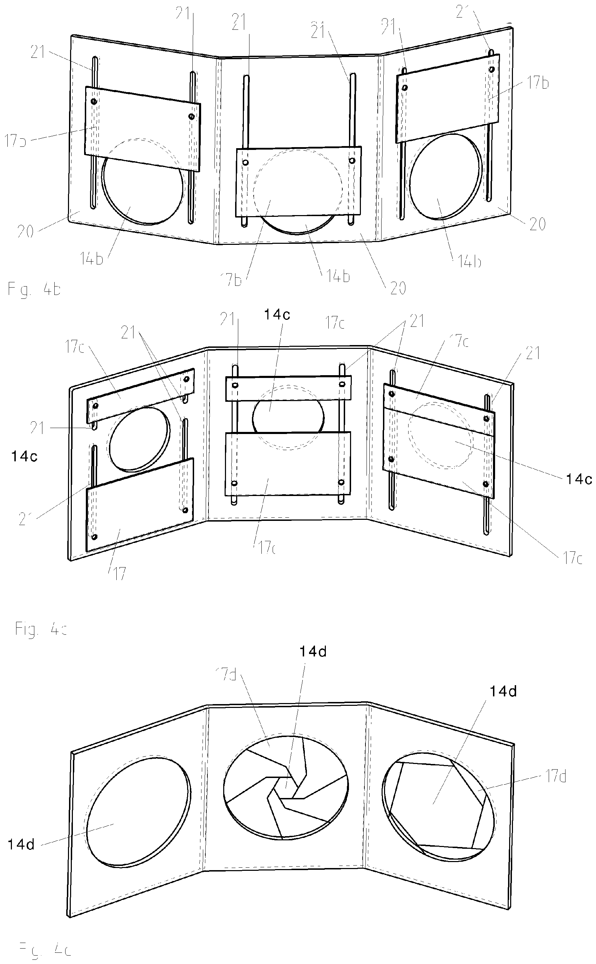

Wie in Fig. 4b und Fig. 4c gezeigt, besteht eine weitere Möglichkeit darin, dass die Absperrelemente in Form von parallel zur Seitenwand des Verteilerkopfes an der Stelle der jeweiligen Öffnung 14b bzw. 14c verschiebbaren Scheiben 17b bzw. 17c ausgebildet sind. In diesen Beispielen sind die Scheiben rechteckig, aber auch hier sind anders geformte Scheiben möglich.

In Fig. 4b ist ein Absperrelement in Form einer einzigen Scheibe 17b pro Öffnung 14b dargestellt. Außerdem sind Führungen 21 dargestellt, entlang derer die Scheiben parallel zur Seitenwand verschiebbar sind. Hier sind jeder Scheibe zwei Führungen zugeordnet, eine andere Zahl, beispielsweise eine, drei oder mehr Führungen sind ebenfalls möglich.

Von links nach rechts sind eine fast offene Durchlassstellung, eine fast geschlossene Durchlassstellung und eine komplett offene Durchlassstellung gezeigt, so dass auch hier (bei gleichem Saatguttyp) die durchgelassene Saatgutmenge zwischen den Durchlassstellungen variiert.

In Fig. 4c umfasst jedes Absperrelement zwei Scheiben 17c pro Öffnung 14c. Die beiden Scheiben sind können jeweils eigene Führungen 21 haben, wie links dargestellt, oder, wie in den beiden rechten Fällen die Führungen 21 teilen. Hier ist links eine ganz offene Durchlassstellung, in der Mitte eine teilweise offene Durchlassstellung und rechts eine Absperrstellung gezeigt. Die Scheiben, die einer Öffnung zugeordnet sind, können gleiche oder, wie hier gezeigt, unterschiedliche Größe haben. In diesem Beispiel sind die Flächen der einzelnen Scheiben nicht groß genug, um die gesamte Öffnung abzudecken. Die gemeinsame Größe beider Scheiben reicht jedoch aus um die gesamte Öffnung abzudecken.

In Fig. 4d sind die Absperrelemente in Form von Lammellenblenden 17d ausgebildet. Je nach dem wie viele Lamellen die Blende hat, ist die effektive Öffnung zum Saatgutdurchlass in Form eines Vielecks ausgebildet, dessen Fläche von der Öffnung der Lammelenblende abhängt. In diesem Fall umfasst die Lammelenblende 6 Lamellen, so dass die Fläche der effektiven Öffnung sechseckig ist. Die Anzahl der Lamellen kann jedoch auch mehr oder weniger als 6 sein. Links ist die Blende ganz offen, so dass die Öffnung 14d nicht verdeckt ist und die effektive Öffnung der Öffnung 14d der Abgangsleitung entspricht. In der Mitte und rechts sind zwei verschiedene Blendenöffnungen gezeigt, wobei die Blende nicht ganz offen ist.

Zum Einstellen der Stellungen der Absperrelemente, insbesondere das Schwenken und Verschieben, kann in allen oben beschriebenen Beispielen beispielsweise ein Servomotor oder eine Magnet vorgesehen sein, wobei im letzteren Fall die Absperrelemente zumindest teilweise magnetisch ausgebildet sind.

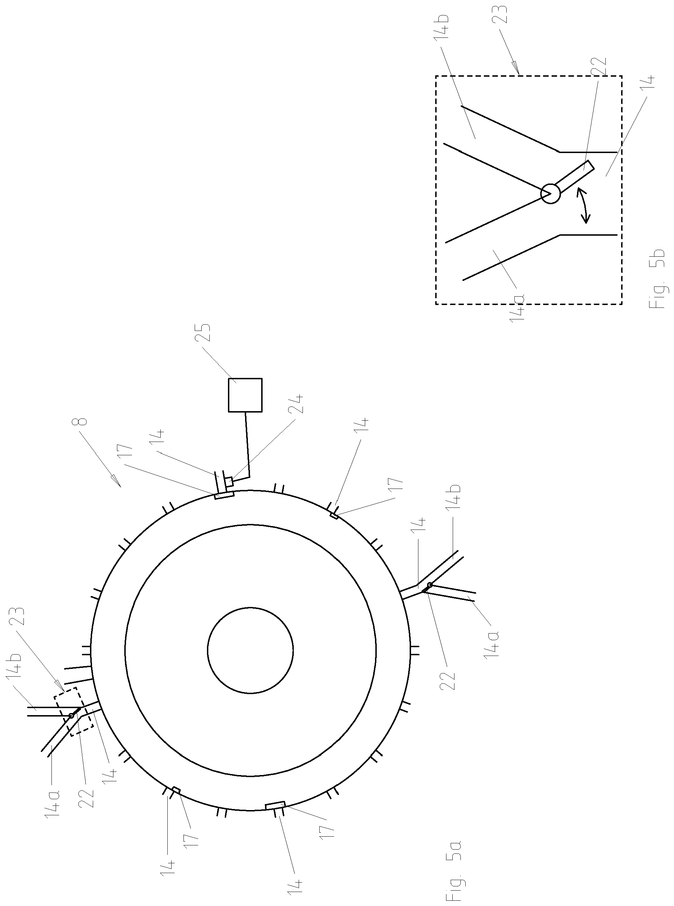

Fig. 5a zeigt eine Draufsicht auf den Verteilerkopf 8, wobei hier die Förderleitung 13 nur angedeutet ist und entlang des Umfangs des Verteilerkopfs eine Vielzahl von Abgangsleitungen 14 angeordnet ist, wobei von manchen der Abgangsleitungen eine Rückführleitung 14b abzweigt, die zum Zurückführen von Saatgut in den Saatgutbehälter ausgebildet ist, während der Teil 14a zu der jeweiligen (hier nicht gezeigten) Säschar führt. An diesen Abzweigungen ist jeweils ein Absperrelement 22 vorgesehen, dass in diesem Fall in Form einer Weiche ausgebildet ist, die je nach Durchlassstellung eine unterschiedliche Menge von Saatgut in den Teil 14a, also zur Säschar, leitet. Der restliche Teil des Saatgutes wird in die Rückführleitung 14b gelenkt, so dass es in den (hier nicht gezeigten) Saatgutbehälter zurücktransportiert wird.

In Fig. 5a sind außerdem Absperrelemente 17 in unterschiedlichen Durchlassstellungen oder der Absperrstellung gezeigt, die beispielsweise in Form der in Fig. 4a-4d gezeigten Absperrelemente 17a-17d ausgebildet sein können.

Die Figur dient der Veranschaulichung möglicher Anordnungen der Absperrelemente. Es können auch mehr oder weniger Absperrelemente, insbesondere ein Absperrelement pro Öffnung oder ein Absperrelement für zwei Öffnungen vorgesehen sein. Es können auch andere als die hier dargestellten Absperrelemente vorgesehen sein, insbesondere ausschließlich Weichen 22 oder ausschließlich Scheiben 17 a-c oder ausschließlich Blenden 17d oder eine Kombination aus den vorstehenden Absperrelementen.

Außerdem ist hier ein optionales Sensorelement 24 eingezeichnet, das so ausgebildet ist, dass es den Saatgutstrom in einer Abgangsleitung misst, beispielsweise mit einem optischen Verfahren. Es kann optional, wie hier gezeigt, eine optional vorgesehene Regel- und/oder Steuereinrichtung 25, die jeweils zum Steuern und/oder Regeln des jeweiligen Absperrelements ausgebildet sind. Das Sensorelement und die Regel- und/oder Steuereinrichtung können miteinander verbunden oder verbindbar sein. Die Verbindung ist eine Datenverbindung und kann beispielsweise drahtgebunden oder drahtlos sein, insbesondere kann sie Bluetooth oder WLAN umfassen. Das Sensorelement ist hier beispielhaft bei einem der Absperrelemente gezeigt, es können aber auch Sensorelemente bei einem, mehreren oder allen anderen Absperrelementen vorgesehen sein, insbesondere auch bei der Weiche.

Fig. 5b zeigt einen Ausschnitt 23 aus Fig. 5a, in dem die Abzweigung mit der Weiche 22 vergrößert dargestellt ist. Das Absperrelement ist in Form einer Weiche 22 ausgebildet, die in mindestens zwei Stellungen gebracht werden kann, nämlich eine Durchlassstellung, in der das gesamte Saatgut zur Säschar transportiert wird, und eine Durchlassstellung, in der ein Teil des Saatguts zur Säschar transportiert und der Rest des Saatguts in den Saatgutbehälter zurücktransportiert wird. Es sind weitere Durchlassstellungen möglich. Zudem kann eine Stellung vorgesehen sein, in der das gesamte Saatgut zum Saatgutbehälter zurücktransportiert wird, also eine Absperrstellung. Das Verhältnis zwischen ausgebrachtem und zurückgeführtem Saatgut variiert je nach Stellung der Weiche.

Bei einem Ausführungsbeispiel für ein erfindungsgemäßes Verfahren wird, beispielsweise mit dem oben genannten Gebläse, Saatgut aus einem Saatgutbehälter pneumatisch in den Verteilerkopf transportiert. Absperreinrichtungen, die jeweils einer Abgangsleitung des Verteilerkopfes zugeordnet sind werden zum Verändern der durchgelassenen Saatgutmenge in unterschiedliche Durchlassstellungen eingestellt. In den jeweiligen Durchlassstellungen wird die Öffnung der Abgangsleitungen entweder nicht oder teilweise bedeckt. Das Verfahren kann optional auch das Einstellen in eine Absperrstellung umfassen, wobei die Öffnung dann ganz bedeckt ist.

Die durchgelassene Saatgutmenge in einer Abgangsleitung kann schrittweise oder kontinuierlich verändert werden. Dies kann beispielsweise erzielt werden, indem die Öffnung der Abgangsleitung schrittweise oder kontinuierlich bedeckt oder aufgedeckt wird. Bei einem schrittweisen Verstellen sind erfindungsgemäß mindestens zwei Durchlassstellungen und gegebenenfalls zusätzlich eine Absperrstellung vorgesehen.

In den oben beschriebenen Sämaschinen können Absperrelemente, beispielsweise die in Fig. 4a gezeigten Scheiben, rotiert werden, oder Absperrelemente, wie beispielsweise die Scheiben in den Fig. 4b und 4c verschoben werden, oder ein Absperrelement in Form einer Blende, wie beispielsweise die in Fig. 4d gezeigte Lamellenblende, betätigt werden, um die verschiedenen Durchlassstellungen und gegebenenfalls die Absperrstellung einzustellen.

Es ist auch möglich, die durchgelassene Saatgutmenge mit einer Weiche einzustellen, die in eine Abgangsleitung so angeordnet ist, dass je nach Stellung der Weiche das gesamte Saatgut zur Säschar transportiert wird oder ein Teil des Saatguts in den Saatgutbehälter zurückgeführt wird. Das Einstellen der Weiche kann zum Beispiel ein Rotieren bzw. Klappen der Weiche sein. Je nach Weichenstellung können das Verhältnis zwischen ausgebrachtem und zurückgeführtem Saatgut variiert werden.

Das Einstellen kann beispielsweise mit einem Servomotor oder magnetisch erfolgen.

Mit der Steuereinrichtung werden den Abgangsleitungen zugeordnete Absperreinrichtungen des Verteilerkopfes gesteuert, so dass sie die Abgangsleitungen teilweise, ganz oder gar nicht abdecken. Somit wird die Saatgutmenge, die zu den einzelnen Säscharen durchgelassen wird, mit den Absperrelementen eingestellt. Die Steuerung der Absperrelemente kann beispielsweise manuell oder automatisch basierend auf vorgegebenen Parametern erfolgen. Alternativ kann eine Regelschaltung eingebaut sein, die basierend auf Messwerten für die durchgelassene Saatgutmenge, die von Sensoren aufgenommen werden, die die Durchlassstellungen einstellt und somit die durchgelassene Saatgutmenge steuert.

Es versteht sich, dass in den zuvor beschriebenen Ausführungsbeispielen genannte Merkmale nicht auf diese speziellen Kombinationen beschränkt sind, und auch in beliebigen anderen Kombinationen innerhalb des durch die Ansprüche definierten Schutzbereichs möglich sind.

## Patentansprüche

1. Pneumatische Sämaschine (1) mit mehreren Säscharen (4), denen Saatgut von einem Saatgutbehälter (7) über einen Verteilerkopf (8), von dem einzelne Abgangsleitungen (14) zu den einzelnen Säscharen (4) führen, pneumatisch zugeführt wird, wobei den Abgangsleitungen (14) Absperrelemente (17) zugeordnet sind, wobei die Absperrelemente (17) zum Verändern der durchgelassenen Saatgutmenge in unterschiedliche Durchlassstellungen einstellbar sind, wobei die Absperrelemente (17) jeweils eine Weiche mit mindestens zwei Durchlassstellungen umfassen, wobei in den Durchlassstellungen ein Saatgutstrom auf einen ersten Teil (14a) der jeweiligen Abgangsleitung (14), der mit dem Säschar (4) verbunden ist, und einen zweiten Teil (14b) der jeweiligen Abgangsleitung (14), der mit dem Saatgutbehälter (7) verbunden ist, in unterschiedlichem Verhältnis aufgeteilt wird, **dadurch gekennzeichnet, dass** die Absperrelemente (17) mindestens in eine erste Durchlassstellung, in der die verteilerkopfseitige Öffnung der Abgangsleitung (14) nicht abgedeckt ist, in eine zweite Durchlassstellung, in der die verteilerkopfseitige Öffnung der Abgangsleitung (14) teilweise abgedeckt ist und in eine Absperrstellung, in der die verteilerkopfseitige Öffnung der jeweiligen Abgangsleitung (14) ganz abgedeckt ist, einstellbar sind und wobei die Sämaschine eine Regeleinrichtung (25) zum automatischen Regeln der Absperrelemente (17) umfasst.

2. Pneumatische Sämaschine (1) nach Anspruch 1, wobei die Absperrelemente (17) derart ausgebildet und/oder angeordnet sind, dass die durchgelassene Saatgutmenge schrittweise oder kontinuierlich veränderbar ist, insbesondere durch Erhöhen oder Verringern der Größe der verteilerkopfseitigen Öffnung der jeweiligen Abgangsleitung (14).

3. Pneumatische Sämaschine (1) nach einem der vorangegangenen Ansprüche, wobei die Absperrelemente (17) jeweils eine Verschlussklappe umfassen.

4. Pneumatische Sämaschine (1) nach einem der vorangegangenen Ansprüche, wobei die Absperrelemente (17) jeweils eine Blende, insbesondere eine Lamellenblende, umfassen, die derart ausgebildet und/oder angeordnet ist, dass der Durchmesser der verteilerkopfseitigen Öffnung der jeweiligen Abgangsleitung (14) schrittweise oder kontinuierlich erhöht oder verringert werden kann.

5. Pneumatische Sämaschine (1) nach einem der vorangegangenen Ansprüche, umfassend eine Steuereinrichtung (25) zum manuellen und/oder automatischen Steuern der Absperrelemente (17).

6. Pneumatische Sämaschine (1) nach einem der vorangegangenen Ansprüche, des Weiteren umfassend einen Sensor (24) zum Detektieren der durchgelassenen Saatgutmenge und/oder eines Füllstands des Saatguts im Saatgutbehälter (7), wobei insbesondere zwischen dem Sensor (24) und der Regeleinrichtung (25) eine Datenverbindung besteht oder herstellbar ist.

7. Verfahren zum Verteilen von Saatgut mittels einer pneumatischen Sämaschine (1) mit mehreren Säscharen (4), wobei den Säscharen (4) Saatgut von einem Saatgutbehälter (7) über einen Verteilerkopf (8), von dem einzelne Abgangsleitungen (14) zu den einzelnen Säscharen (4) führen, pneumatisch zugeführt wird, wobei den Abgangsleitungen (14) Absperrelemente (17) zugeordnet sind, wobei die Absperrelemente (17) zum Verändern der durchgelassenen Saatgutmenge in unterschiedliche Durchlassstellungen eingestellt werden, wobei eine von mindestens zwei Durchlassstellungen eines der Absperrelemente (17), beispielsweise einer Weiche, eingestellt wird, wobei in den Durchlassstellungen ein Saatgutstrom auf einen ersten Teil (14a) der jeweiligen Abgangsleitung (14), der mit dem Säschar (4) verbunden ist, und einen zweiten Teil (14b) der jeweiligen Abgangsleitung (14), der mit dem Saatgutbehälter (7) verbunden ist, in unterschiedlichem Verhältnis aufgeteilt wird, **dadurch gekennzeichnet, dass** jedes der Absperrelemente (17) jeweils in eine erste Durchlassstellung, in der die Verteilerkopfseitige Öffnung der Abgangsleitung (14) nicht abgedeckt ist oder in eine zweite Durchlassstellung, in der die verteilerkopfseitige Öffnung der Abgangsleitung (14) teilweise abgedeckt ist oder in eine Absperrstellung, in der die verteilerkopfseitige Öffnung der Abgangsleitung (14) ganz abgedeckt ist, eingestellt wird, wobei mit einem Sensor (24) der Saatgutstrom in einer der Abgangsleitungen (14) und/oder ein Füllstand des Saatguts im Saatgutbehälter (7) detektiert werden, wobei die so erzeugten Messwerte an eine Regeleinrichtung (25) übermittelt werden und die Regeleinrichtung basierend auf den Messwerten das der Abgangsleitung (14) zugeordnete Absperrelement (17) automatisch regelt.

8. Verfahren zum pneumatischen Verteilen von Saatgut nach Anspruch 7, wobei die durchgelassene Saatgutmenge schrittweise oder kontinuierlich verändert wird, insbesondere durch Erhöhen oder Verringern der Größe der verteilerkopfseitigen Öffnung der Abgangsleitungen (14).

9. Verfahren zum pneumatischen Verteilen von Saatgut nach einem der Ansprüche 7 bis 8, wobei die Absperrelemente (17) mit einer Steuereinrichtung (25) automatisch und/oder manuell gesteuert werden.

## Claims

1. Pneumatic sowing machine (1) having multiple coulters (4), to which seed from a seed container (7) is supplied pneumatically via a distributor head (8), from which individual output lines (14) lead to the individual coulters (4), the output lines (14) being assigned shut-off elements (17), the shut-off elements (17) being adjustable into different passage positions to change the quantity of seed let through, the shut-off elements (17) each comprising a diverter having at least two passage positions, in the passage positions, a stream of seed being divided up in a different ratio to a first part (14a) of the respective output line (14), which is connected to the coulter (4), and a second part (14b) of the respective output line (14), which is connected to the seed container (7), **characterized in that** the shut-off elements (17) are adjustable at least into a first passage position, in which the opening on the distributor-head side of the output line (14) is not covered, into a second passage position, in which the opening on the distributor-head side of the output line (14) is partly covered, and into a shut-off position, in which the opening on the distributor-head side of the respective output line (14) is entirely covered, and wherein the sowing machine comprises a control device (25) for automatic control of the shut-off elements (17).

2. Pneumatic sowing machine (1) according to Claim 1, wherein the shut-off elements (17) are formed and/or arranged in such a way that the quantity of seed let through can be varied step-by-step or continuously, in particular by increasing or reducing the size of the opening on the distributor-head side of the respective output line (14).

3. Pneumatic sowing machine (1) according to one of the preceding claims, wherein the shut-off elements (17) each comprise a closure flap.

4. Pneumatic sowing machine (1) according to one of the preceding claims, wherein the shut-off elements (17) each comprise a diaphragm, in particular a louvred diaphragm, which is formed and/or arranged in such a way that the diameter of the opening on the distributor-head side of the respective output line (14) can be increased or reduced step-by-step or continuously.

5. Pneumatic sowing machine (1) according to one of the preceding claims, comprising a control device (25) for manual and/or automatic control of the shut-off elements (17).

6. Pneumatic sowing machine (1) according to one of the preceding claims, further comprising a sensor (24) for detecting the quantity of seed let through and/or a level of the seed in the seed container (7), wherein in particular a data link exists or can be produced between the sensor (24) and the control device (25).

7. Method for distributing seed by means of a pneumatic sowing machine (1) having multiple coulters (4), seed from a seed container (7) being supplied pneumatically to the coulters (4) via a distributor head (8), from which individual output lines (14) lead to the individual coulters (4), the output lines (14) being assigned shut-off elements (17), the shut-off elements (17) being adjusted into different passage positions to change the quantity of seed let through, one of at least two passage positions of one of the shut-off elements (17), for example a diverter, being adjusted, in the passage positions a stream of seed being divided up in a different ratio to a first part (14a) of the respective output line (14), which is connected to the coulter (4), and a second part (14b) of the respective output line (14), which is connected to the seed container (7), **characterized in that** each of the shut-off elements (17) is respectively adjusted into a first passage position, in which the opening on the distributor-head side of the output line (14) is not covered, or into a second passage position, in which the opening on the distributor-head side of the output line (14) is partly covered, or into a shut-off position, in which the opening on the distributor-head side of the output line (14) is entirely covered, wherein the stream of seed in one of the output lines (14) and/or a level of the seed in the seed container (7) is detected by a sensor (24), wherein the measured values thus produced are transmitted to a control device (25), and the control device automatically controls the shut-off element (17) assigned to the output line (14) on the basis of the measured values.

8. Method for pneumatically distributing seed according to Claim 7, wherein the quantity of seed let through is changed step-by-step or continuously, in particular by increasing or reducing the size of the opening on the distributor-head side of the output lines (14).

9. Method for pneumatically distributing seed according to either of Claims 7 and 8, wherein the shut-off elements (17) are controlled automatically and/or manually by a control device (25) .

## Revendications

1. Machine d'ensemencement pneumatique (1) comprenant une pluralité de socs d'ensemencement (4) auxquels la semence est amenée pneumatiquement depuis un réservoir de semence (7) par le biais d'une tête de distribution (8) de laquelle des conduits de sortie individuels (14) vont jusqu'aux socs d'ensemencement individuels (4), des éléments de fermeture (17) étant associés aux conduits de sortie (14), les éléments de fermeture (17) étant réglables dans différentes positions de passage pour modifier la quantité de semence qui passe à travers ceux-ci, les éléments de fermeture (17) comprenant chacun un moyen d'aiguillage comportant au moins deux positions de passage, un flux de semence étant divisé, dans les positions de passage, dans des proportions différentes en une première partie (14a) du conduit de sortie respectif (14), qui est raccordée au soc d'ensemencement (4), et en une deuxième partie (14b) du conduit de sortie respectif (14) qui est raccordée au réservoir de semence (7), **caractérisée en ce que** les éléments de fermeture (17) peuvent être réglés au moins dans une première position de passage dans laquelle l'ouverture côté tête de distribution du conduit de sortie (14) n'est pas recouverte, dans une deuxième position de passage dans laquelle l'ouverture côté tête de distribution du conduit de sortie (14) est partiellement recouverte, et dans une position de fermeture dans laquelle l'ouverture côté tête de distribution du conduit de sortie respectif (14) est totalement recouverte, et la machine d'ensemencement comprenant un dispositif de réglage (25) destiné à régler automatiquement les éléments de fermeture (17).

2. Machine d'ensemencement pneumatique (1) selon la revendication 1, les éléments de fermeture (17) étant conçus et/ou disposés de manière à pouvoir modifier la quantité de semence passée en continu ou progressivement, en particulier par augmentation ou diminution de la dimension de l'ouverture côté tête de distribution du conduit de sortie respectif (14).

3. Machine d'ensemencement pneumatique (1) selon l'une des revendications précédentes, les éléments de fermeture (17) comprenant chacun un volet de fermeture.

4. Machine d'ensemencement pneumatique (1) selon l'une des revendications précédentes, les éléments de fermeture (17) comprenant chacun un obturateur, en particulier un obturateur à lamelles, qui est conçu et/ou disposé de manière à pouvoir augmenter ou diminuer progressivement ou en continu le diamètre de l'ouverture côté tête de distribution du conduit de sortie respectif (14).

5. Machine d'ensemencement pneumatique (1) selon l'une des revendications précédentes, comprenant un dispositif de commande (25) destiné à commander manuellement et/ou automatiquement les éléments de fermeture (17).

6. Machine d'ensemencement pneumatique (1) selon l'une des revendications précédentes, comprenant en outre un capteur (24) destiné à détecter la quantité de semence passée et/ou un niveau de remplissage de la semence dans le réservoir de semence (7), une liaison de données étant ou pouvant être établie en particulier entre le capteur (24) et un dispositif de commande (25) .

7. Procédé de distribution de semence au moyen d'une machine d'ensemencement pneumatique (1) comprenant une pluralité de socs d'ensemencement (4), la semence étant amenée pneumatiquement aux socs d'ensemencement (4) depuis un réservoir de semence (7) par le biais d'une tête de distribution (8) de laquelle des conduits de sortie individuels (14) vont jusqu'aux socs d'ensemencement individuels (4), des éléments de fermeture (17) étant associés aux conduits de sortie (14), les éléments de fermeture (17) étant réglables dans différentes positions de passage pour modifier la quantité de semence passée, l'une au moins de deux positions de passage de l'un des éléments de fermeture (17) étant réglée par exemple à l'aide d'un moyen d'aiguillage, un flux de semence étant divisé, dans les positions de passage, dans des proportions différentes en une première partie (14a) du conduit de sortie respectif (14), qui est raccordée au soc d'ensemencement (4), et en une deuxième partie (14b) du conduit de sortie respectif (14) qui est raccordée au réservoir de semence (7), **caractérisé en ce que** chacun des éléments de fermeture (17) peut être réglé au moins dans une première position de passage dans laquelle l'ouverture côté tête de distribution du conduit de sortie (14) n'est pas recouverte, ou dans une deuxième position de passage dans laquelle l'ouverture côté tête de distribution du conduit de sortie (14) est partiellement recouverte, ou dans une position de fermeture dans laquelle l'ouverture côté tête de distribution du conduit de sortie respectif (14) est totalement recouverte, le flux de semence dans l'un des conduits de sortie (14) et/ou un niveau de remplissage de semence dans le réservoir de semence (7) étant détecté au moyen d'un capteur (24), les valeurs de mesure ainsi générées étant transmises à un dispositif de réglage (25) et le dispositif de réglage réglant automatiquement l'élément de fermeture (17), associé au conduit de sortie (14), sur la base des valeurs de mesure.

8. Procédé de distribution pneumatique de semence selon la revendication 7, la quantité de semence passée étant modifiée progressivement ou en continu, en particulier par augmentation ou diminution de la dimension de l'ouverture côté tête de distribution des conduits de sortie (14).

9. Procédé de distribution pneumatique de semence selon l'une des revendications 7 à 8, les éléments de fermeture (17) étant commandés automatiquement et/ou manuellement au moyen d'un dispositif de commande (25).
